# EUROPÄISCHE PATENTSCHRIFT

(11) **EP 2 214 936 B1**
(45) Veröffentlichungstag und Bekanntmachung des Hinweises auf die Patenterteilung: **15.11.2017**
(21) Anmeldenummer: 08804093.6
(22) Anmeldetag: 12.09.2008
(51) Int. Cl.: B60S 1/38

(54) **WISCHBLATT**
WIPER BLADE
BALAI D'ESSUIE-GLACE

(30) Priorität: 02.11.2007 DE 102007052357
(43) Veröffentlichungstag der Anmeldung: 11.08.2010
(73) Patentinhaber: Robert Bosch GmbH, 70442 Stuttgart (DE)
(72) Erfinder: WILMS, Christian, B-3582 Koersel-Beringen (BE); LAMMENS, Koen, B-3001 Haverlee (BE); VERELST, Hubert, B-3300 Tienen (BE)
(86) Internationale Anmeldenummer: PCT/EP2008/062128
(87) Internationale Veröffentlichungsnummer: WO 2009/056385

(56) Entgegenhaltungen:
- EP-A- 1 574 409
- DE-A1-102004 015 423
- DE-A1-102004 051 467
- DE-A1-102005 052 258
- FR-A1- 2 905 650
- US-A1- 2007 240 271

## Beschreibung

### Stand der Technik

Die Erfindung geht von einem Wischblatt nach dem Oberbegriff des Anspruchs 1 aus.

Aus der DE 10 2004 015423 A1 ist ein so genanntes gelenkfreies Wischblatt bekannt, das eine gummielastische Wischleiste mit einer Wischlippe besitzt. In einer Kopfleiste sind seitliche Längsnuten vorgesehen, in die als Tragelement Federschienen eingesetzt sind. Diese werden durch Brückenelemente an ihren Enden und ein mittleres Anschlusselement zusammen und auf einen vorgegebenen Abstand gehalten. Die Brückenelemente werden mit Endkappen abgedeckt. Bei einer Ausführung besitzt eine Endkappe eine an einer äußeren Stirnwand innen angeformte Federzunge, die sich in Längsrichtung zur Mitte des Wischblatts erstreckt und an ihrem freien Ende einen Quetschkörper aufweist, der die Wischleiste derart verquetscht, dass sie sich zwischen den Federschienen und/oder der Brücke verspannt und damit gegen axiales Verschieben fixiert ist.

Aus der DE 10 2004 051 467 A1 ist ein gattungsgemäßes Wischblatt bekannt, bei dem die Fixiermittel in einer Endkappe integriert sind. Diese ist zweiteilig ausgebildet und besteht aus einem Basisteil und einem Deckel, der in montiertem Zustand eine Verschlussposition einnimmt. Das Basisteil wird mit geöffnetem Deckel auf das Ende der Wischleiste gefügt, bis Rasthaken des Basisteils mit ihren Rastnasen an der vom Ende des Wischblatts abgewandten Seite der Brückenelemente verrasten.

In dieser Position wird der Deckel geschlossen, wobei zwei am Deckel angeordnete Nocken während der Schwenkbewegung mit zunehmendem Druck auf eine Federzunge des Basisteils wirken. An der der Kopfleiste zugewandten Seite der Federzunge befindet sich ein Verriegelungsdorn, dessen Spitze beim Verschließen des Deckels in die elastische Oberfläche der Kopfleiste eingedrückt wird, sodass diese über die Endkappe relativ zu den Federschienen fixiert ist. Zudem verriegeln zwei seitlich an der Federzunge angeformte Wangen die Rasthaken. Der Verriegelungsdorn ist im mittleren Bereich zwischen den Längsnuten für die Federschienen angeordnet, sodass er praktisch keinen Druck auf diese ausübt.

Aus der DE 10 2004 051 466 A1 ist ein ähnliches Wischblatt bekannt, das jedoch keine Brücke aufweist. Die Federschienen werden stattdessen durch eine Endkappe zusammen und auf Distanz gehalten. Eine keilförmige Sperrnase wird im montierten Zustand von einem Riegel gegen die Kopfleiste der Wischleiste gedrückt, und zwar ebenfalls in dem Bereich zwischen den Längsnuten für die Federschienen. Auf Grund der Keilform drückt sich die Sperrnase in die elastische Kopfleiste, während seitliche Rastzapfen in entsprechende Rastlöcher der Federschienen einrasten.

Schließlich zeigt eine ältere, nicht vorveröffentlichte Patentanmeldung FR 2 905 650 A1 ein Wischblatt, dessen Wischleiste von einem Leistenträger an ihrer Kopfleiste gehalten wird. In einem Längskanal des Leistenträgers, der oberhalb der Kopfleiste angeordnet ist, befindet sich als Tragelement eine einzige vorgekrümmte Federschiene. An den Enden besitzt der Leistenträger Endkappen, in denen im Bereich der Federschiene ein ein- und ausrastbares Sperrelement vorgesehen ist, das in eine Aussparung der Federschiene im montierten Zustand einrastet und durch einen Sperrriegel blockiert wird. Der Sperrriegel verläuft quer zur Längsrichtung der Endkappe und ist in einander gegenüber liegenden Öffnungen der Seitenwände der Endkappe sowie in eine Quernut der Kopfleiste mit einem Passsitz eingesetzt, sodass er sich auf Grund der Reibkräfte nicht selbstständig im Betrieb lösen kann.

### Offenbarung der Erfindung

Im montierten Zustand der Endkappe drücken die Fixiermittel mit einem Vorsprung über eine Kopfleiste der Wischleiste so stark auf die Federschienen, dass zwischen den Federschienen einerseits und der Kopfleiste oder den Fixiermitteln andererseits ein für die axiale Fixierung ausreichender Kraftschluss gegeben ist.

Nach der Erfindung weisen die Fixiermittel einen zur Wischlippe weisenden Vorsprung auf, der in seiner Erstreckung quer zur Längsrichtung des Wischblatts in den Bereich der Federschienen reicht. Hierbei kann sich der Vorsprung an dem Steg zwischen den Längsnuten abstützen, wenn die Wischlippe an der Fahrzeugscheibe anliegt, sodass eine höhere Anpresskraft erforderlich ist, um den gleichen Anpressdruck auf die Federschienen zu erreichen. Die Erstreckung quer zur Längsrichtung kann so weit reichen, bis der Vorsprung in Form eines Querbalkens die Kopfleiste vollständig in der Querrichtung überdeckt und somit eine maximale Anpressfläche zwischen der Kopfleiste und den Federschienen im Bereich des Querbalkens erzeugt.

Die Kontaktfläche zwischen den Fixiermitteln und der Kopfleiste ist relativ groß, um bei der Elastizität der Kopfleiste einen genügend hohen Druck für den Kraftschluss ausüben zu können, ohne die Kopfleiste selbst zu beschädigen. Dabei ist es vorteilhaft, die Fixiermittel zumindest an der Kontaktfläche zur Wischleiste hin aus einem Kunststoff zu fertigen oder zu beschichten, wodurch die Reibung zwischen den Bauteilen erhöht wird.

Um den elastischen Einfluss der Kopfleiste auf das Anpressverhalten der Fixiermittel zu modifizieren, kann es zweckmäßig sein, dass der Querbalken in einem Schlitz in der Kopfleiste geführt ist. Durch die Tiefe des Schlitzes kann die Stärke des elastischen Materials zwischen dem Querbalken und den Federschienen bestimmt werden. Mit abnehmender Stärke wird der Kraftschluss weniger elastisch. Dies kann so weit getrieben werden, bis der Querbalken unmittelbar auf die Federschienen gedrückt wird. Der Schlitz, in dem der Querbalken geführt ist, bildet zusätzlich zu der kraftschlüssigen Fixierung des Querbalkens relativ zur Kopfleiste bzw. den Federschienen eine formschlüssige Verankerung in der Kopfleiste.

Der Schlitz für den Querbalken kann bei Wischleisten, die im Spritzgussverfahren hergestellt wurden, im gleichen Verfahren durch eine entsprechende Gestaltung des Spritzwerkzeugs hergestellt werden. Wird die Wischleiste extrudiert, wird der Schlitz vorzugsweise während des Fertigungsvorgangs mit einem Hochgeschwindigkeitsschleifverfahren hergestellt. In beiden Fällen ist es zweckmäßig, an beiden Enden der Wischleiste jeweils einen gleichen Schlitz vorzusehen, damit bei der Montage der Wischleiste nicht darauf geachtet zu werden braucht, welches Ende der Wischleiste fixiert werden soll.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine perspektivische Teilansicht eines Wischblattendes,
- Fig. 2: ein Wischblattende nach Fig. 1 mit geöffneter Endkappe,
- Fig. 3: ein Wischblattende nach Fig. 1 ohne Endkappe,
- Fig. 4: eine Endkappe in perspektivischer Darstellung von unten,
- Fig. 5: einen schematischen Teilquerschnitt entsprechend der Linie V-V in Fig. 2 und
- Fig. 6: bis Fig. 8 Varianten zu Fig. 5.

### Ausführungsformen der Erfindung

Von einem Scheibenwischer sind nur die Teile eines Wischblatts 10 in Flachbauweise dargestellt, so weit sie für das Verständnis der Erfindung notwendig sind. Das Wischblatt 10 weist eine Wischleiste 12 aus einem elastomeren Werkstoff auf, deren untere, einer nicht dargestellten Fahrzeugscheibe zugewandte Seite als Wischlippe 14 ausgebildet ist, während die obere Seite eine Kopfleiste 16 bildet. Diese ist mit der Wischlippe 14 über einen Kippsteg 18 verbunden. Die Kopfleiste 16 besitzt an jeder Längsseite jeweils eine Längsnut 20, in die jeweils eine Federschiene 22 aus Federstahl oder Kunststoff eingelegt ist. Die zwei Federschienen 22 dienen zusammen als Tragelement. Auf den Federschienen 22, die an den Längsseiten ein Stück weit aus den Längsnuten 20 vorstehen, ist ein Spoiler 26 geführt.

Die Enden der Federschienen 22 sind jeweils durch eine Brücke 24 miteinander verbunden. Diese halten die Federschienen 22 auf eine solche Distanz, dass zwischen ihnen ein Spalt für einen Steg 19 frei bleibt, den die Längsnuten 20 zwischen sich bilden. Auf die Enden des Wischblatts 10 wird jeweils eine Endkappe 28 gesteckt, von denen mindestens eine Verriegelungselemente in Form von Vorsprüngen 50 oder 54 oder eines Querbalkens 56 aufweist. Diese werden bei der Montage der Endkappe 28 von der der Wischlippe 14 abgewandten Seite der Kopfleiste 16 gegen diese gedrückt, sodass diese im Bereich der Längsnuten 20 gegen die Federschienen 22 gepresst wird. Die betreffende Endkappe 28 stützt sich hierbei über ein Führungsprofil 40 an den aus den Längsnuten 20 vorstehenden Teilen der Federschienen 22 ab.

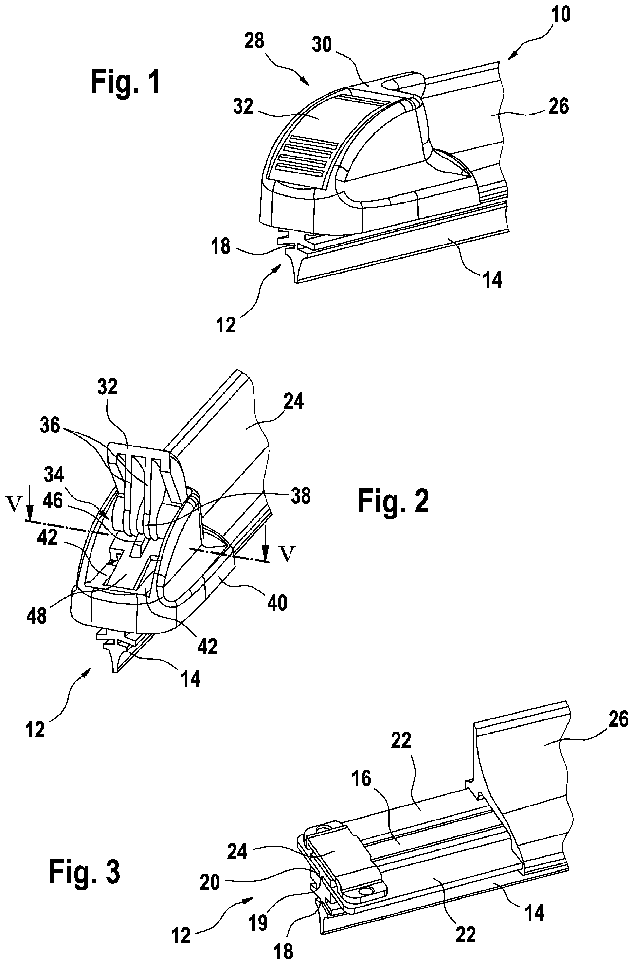

Bei der Ausführung nach Fig. 1 ist die Endkappe 28 zweiteilig ausgeführt. Sie besitzt ein Basisteil 30 mit den Führungsprofilen 40 sowie nachgiebigen Rasthaken 42, die mit ihren Rastnasen 44 bei der Montage hinter der zugeordneten Brücke 24 verrasten und die Endkappe 28 in Längsrichtung zu den Federschienen 22 fixieren.

Das Basisteil 30 besitzt an seiner zum Ende des Wischblatts 10 weisenden Stirnseite eine Öffnung 34, die von einem Deckel 32 verschließbar ist. Dieser kann um eine Schwenkachse quer zur Längsrichtung des Wischblatts 10 geschwenkt werden. Er besitzt an seiner Innenseite senkrecht zur Schwenkachse stehenden Rippen 36, die an ihren inneren Enden in Nocken 38 übergehen. Beim Schließen des Deckels 32 drücken die Nocken 38 auf eine Federzunge 48 des Basisteils 30, die zwischen den Rasthaken 42 angeordnet ist. Zum seitlichen Führen der Federzunge 48 besitzt diese einen Führungssteg 46, der in den Zwischenraum zwischen den Nocken 38 eingreift. Es sind auch andere Vorrichtungen möglich, um die Verriegelungselemente in Form von Vorsprüngen 50, 54 oder Querbalken 56 gegen die Kopfleiste 16 und die Federschienen 22 zu pressen, zum Beispiel keilförmige Bauelemente oder Riegel, wie sie im Stand der Technik beschrieben sind.

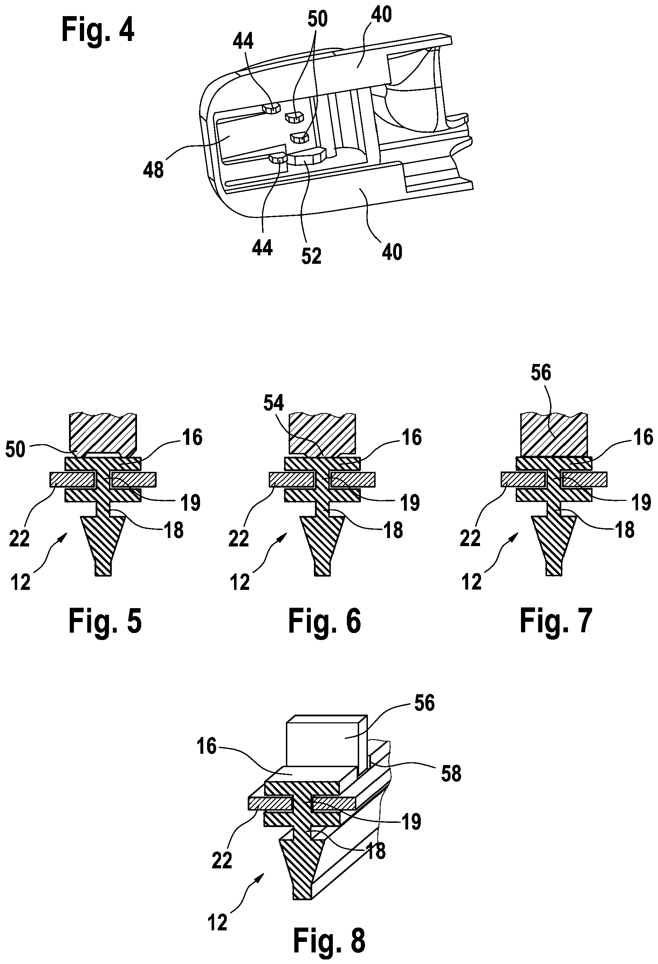

Auf der der Kopfleiste 16 zugewandten Seite besitzt die Federzunge 48 zwei Vorsprünge 50, die beiderseits des Stegs 19 bzw. des Kippstegs 18 angeordnet sind und bei geschlossenem Deckel 32 die Kopfleiste 16 gegen die Federschienen 22 drücken (Fig. 5). Die Vorsprünge 50 bilden mit der Kopfleiste 16 relativ große Kontaktflächen, sodass sich ein guter Kraftschluss zwischen den Federschienen 22 und der Kopfleiste 16 ergibt. Zwei seitliche Wangen 52 an der Federzunge 50 dienen zur Verriegelung der Rasthaken 42.

Die Variante nach Fig. 6 unterscheidet sich von der Ausführung nach Fig. 5 dadurch, dass nur ein Vorsprung 54 vorhanden ist, der in der Quererstreckung über den Steg 19 reicht, und somit die Kopfleiste 16 zu beiden Seiten des Steges 19 bzw. des Kippstegs 18 gegen die Federschienen 22 drücken kann. Das Gleiche gilt für den Querbalken 56 bei der Ausführung nach Fig. 7, der sich über die gesamte Breite der Kopfleiste 16 erstreckt.

In der Ausführung nach Fig. 8 ist der Querbalken 56 in einem Schlitz 58 in der Kopfleiste 16 geführt. Durch die Tiefe des Schlitzes 58 kann das elastische Verhalten der Kopfleiste 16 im Bereich des Querbalkens 56 modifiziert werden. Mit der Dicke der elastischen Restschicht zwischen dem Querbalken 56 und den Federschienen 22 wird der Anpressdruck über den Anpressweg modifiziert. Liegt der Querbalken 56 unmittelbar an den Federschienen 22 an, wird bei geringem Anpressweg eine hohe Anpresskraft und damit ein großer Kraftschluss erzielt. Der Schlitz 58 kann bei der Herstellung in einem Spritzgussverfahren durch das Spritzgusswerkzeug gestaltet werden. Wird die Wischleiste 12 dagegen in einem Extrusionsverfahren gefertigt, kann der Schlitz 58 während des Fertigungsverfahrens durch ein Hochgeschwindigkeitsschleifverfahren hergestellt werden.

## Patentansprüche

1. Wischblatt (10) mit einer gummielastischen Wischleiste (12), in deren seitlichen Längsnuten (20) Federschienen (22) eingesetzt sind, die zu einer Wischlippe (14) hin konkav vorgebogen und an ihren Enden durch Haltemittel (24, 28) zusammengehalten sind, wobei mindestens eine Endkappe (28), die mit Führungsprofilen (40) auf den Federschienen (22) geführt ist, lösbare Fixiermittel aufweist, durch die die axiale Lage der Wischleiste (12) relativ zu den Federschienen (22) gesichert ist, wobei die Fixiermittel (50, 54, 56) im montierten Zustand der Endkappe (28) mit nur einem Vorsprung (54, 56) über eine Kopfleiste (16) der Wischleiste (12) auf die Federschienen (22) so stark drücken, **dadurch gekennzeichnet, dass** zwischen den Federschienen (22) einerseits und der Kopfleiste (16) oder den Fixiermitteln (50, 54, 56) andererseits ein für die axiale Fixierung ausreichender Kraftschluss gegeben ist, der Vorsprung (54, 56) der Fixiermittel in seiner Erstreckung quer zur Längsrichtung des Wischblatts (10) in den Bereich der Federschienen (22) reicht und die Fixiermittel als Vorsprung einen Querbalken (56) aufweisen, der über die Breite der Kopfleiste (16) reicht.

2. Wischblatt (10) nach Anspruch 1, **dadurch gekennzeichnet, dass** der Querbalken (56) in einem Schlitz (58) in der Kopfleiste (16) geführt ist.

3. Wischblatt (10) nach Anspruch 2, **dadurch gekennzeichnet, dass** der Schlitz (58) bis auf die Federschienen (22) reicht, sodass der Querbalken (56) unmittelbar auf die Federschienen (22) drückt.

4. Wischblatt (10) nach Anspruch 1 oder 2, **dadurch gekennzeichnet, dass** die Wischleiste (12) im Spritzgussverfahren hergestellt ist, wobei der Schlitz (58) durch die Werkzeugform vorgegeben ist.

5. Wischblatt (10) nach Anspruch 1 oder 2, **dadurch gekennzeichnet, dass** der Schlitz (58) bei einer extrudierten Wischleiste (12) während des Fertigungsvorgangs mit einem Hochgeschwindigkeitsschleifverfahren hergestellt ist.

6. Wischblatt (10) nach einem der Ansprüche 1 bis 5, **dadurch gekennzeichnet, dass** an beiden Enden der Wischleiste (12) jeweils ein gleicher Schlitz (58) vorgesehen ist.

7. Wischblatt (10) nach einem der vorhergehenden Ansprüche, **dadurch gekennzeichnet, dass** die Fixiermittel (50, 54, 56) eine die Reibung erhöhende Oberflächenbeschichtung besitzen oder aus einem entsprechenden Kunststoff bestehen.

## Claims

1. Wiper blade (10) with a rubber-elastic wiper strip (12), into the lateral longitudinal grooves (20) of which are inserted spring rails (22) which are pre-curved concavely towards a wiper lip (14) and are held together at their ends by holding means (24, 28), wherein at least one end cap (28) which is guided on the spring rails (22) with guide profiles (40) has releasable fixing means, by means of which the axial position of the wiper strip (12) relative to the spring rails (22) is secured, wherein, in the mounted state of the end cap (28), the fixing means (50, 54, 56) greatly press against the spring rails (22) with just one projection (54, 56) via a head strip (16) of the wiper strip (12), **characterized in that** a force fit sufficient for the axial fixing is provided between the spring rails (22), on the one hand, and the head strip (16) or the fixing means (50, 54, 56), on the other hand, the projection (54, 56) of the fixing means reaches in its extent transversely with respect to the longitudinal direction of the wiper blade (10) into the region of the spring rails (22), and the fixing means, as the projection, have a crossbar (56) which reaches over the width of the head strip (16).

2. Wiper blade (10) according to Claim 1, **characterized in that** the crossbar (56) is guided in a slot (58) in the head strip (16).

3. Wiper blade (10) according to Claim 2, **characterized in that** the slot (58) reaches as far as the spring rails (22), and therefore the crossbar (56) presses directly on to the spring rails (22).

4. Wiper blade (10) according to Claim 1 or 2, **characterized in that** the wiper strip (12) is produced by injection moulding, wherein the slot (58) is predetermined by the shape of the mould.

5. Wiper blade (10) according to Claim 1 or 2, **characterized in that**, in the case of an extruded wiper strip (12), the slot (58) is produced with a high-speed grinding process during the manufacturing operation.

6. Wiper blade (10) according to one of Claims 1 to 5, **characterized in that** an identical slot (58) is provided in each case at both ends of the wiper strip (12).

7. Wiper blade (10) according to one of the preceding claims, **characterized in that** the fixing means (50, 54, 56) have a friction-increasing surface coating or are composed of a corresponding plastic.

## Revendications

1. Balai d'essuie-glace (10) avec une lame de balayage élastique en caoutchouc (12), dans les rainures longitudinales latérales (20) de laquelle sont insérés des rails à ressort (22), qui sont pré-incurvés de façon concave en direction d'une lèvre de balayage (14) et qui sont réunis à leurs extrémités par des moyens de maintien (24, 28), dans lequel au moins un capuchon d'extrémité (28), qui est guidé avec des profilés de guidage (40) sur les rails à ressort (22), présente des moyens de fixation amovibles, par lesquels la position axiale de la lame de balayage (12) est bloquée par rapport aux rails à ressort (22), dans lequel les moyens de fixation (50, 54, 56) appuient ainsi fortement, dans l'état monté du capuchon d'extrémité (28), avec seulement une saillie (54, 56) sur les rails à ressort (22) par l'intermédiaire d'une lame de tête (16) de la lame de balayage (12), **caractérisé en ce qu'**il existe entre les rails à ressort (22) d'une part et la lame de tête (16) ou les moyens de fixation (50, 54, 56) d'autre part un assemblage par adhérence suffisant pour la fixation axiale, la saillie (54, 56) des moyens de fixation arrive selon son extension transversalement à la direction longitudinale du balai d'essuie-glace (10) dans la région des rails à ressort (22) et les moyens de fixation présentent comme saillie une barre transversale (56), qui s'étend sur la largeur de la lame de tête (16).

2. Balai d'essuie-glace (10) selon la revendication 1, **caractérisé en ce que** la barre transversale (56) est guidée dans une fente (58) dans la lame de tête (16).

3. Balai d'essuie-glace (10) selon la revendication 2, **caractérisé en ce que** la fente (58) s'étend jusque sur les rails à ressort (22), de telle manière que la barre transversale (56) presse directement sur les rails à ressort (22).

4. Balai d'essuie-glace (10) selon la revendication 1 ou 2, **caractérisé en ce que** la lame de balayage (12) est fabriquée par un procédé de coulée par injection, dans lequel la fente (58) est prédéterminée par la forme de l'outil.

5. Balai d'essuie-glace (10) selon la revendication 1 ou 2, **caractérisé en ce que** la fente (58) est produite, dans le cas d'une lame de balayage extrudée (12), par un procédé de meulage à grande vitesse pendant l'opération de fabrication.

6. Balai d'essuie-glace (10) selon l'une quelconque des revendications 1 à 5, **caractérisé en ce qu'**il est prévu chaque fois une fente identique (58) aux deux extrémités de la lame de balayage (12).

7. Balai d'essuie-glace (10) selon l'une quelconque des revendications précédentes, **caractérisé en ce que** les moyens de fixation (50, 54, 56) possèdent un revêtement de surface augmentant le frottement ou se composent d'une matière plastique correspondante.
